# EUROPÄISCHE PATENTSCHRIFT

(11) **EP 1 839 025 B1**
(45) Veröffentlichungstag und Bekanntmachung des Hinweises auf die Patenterteilung: **07.04.2010**
(21) Anmeldenummer: 05849777.7
(22) Anmeldetag: 16.12.2005
(51) Int. Cl.: G01L 19/04, G01L 19/06, G01L 19/14, G01L 19/00, G01L 9/00, G01L 7/08

(54) **HYDRAULISCHER DRUCKMITTLER UND DRUCKAUFNEHMER BZW. DIFFERENZDRUCKAUFNEHMER MIT HYDRAULISCHEM DRUCKMITTLER**
HYDRAULIC PRESSURE TRANSMITTER AND PRESSURE SENSOR OR DIFFERENTIAL PRESSURE SENSOR PROVIDED WITH SUCH A HYDRAULIC PRESSURE TRANSMITTER
SYSTEME DE TRANSMISSION DE PRESSION HYDRAULIQUE, ET CAPTEUR DE PRESSION OU CAPTEUR DE PRESSION DIFFERENTIELLE COMPRENANT UN SYSTEME DE TRANSMISSION DE PRESSION HYDRAULIQUE

(30) Priorität: 19.01.2005 DE 102005002658
(43) Veröffentlichungstag der Anmeldung: 03.10.2007
(73) Patentinhaber: Endress u. Hauser GmbH u.Co. KG, 79689 Maulburg (DE)
(72) Erfinder: DANNHAUER, Wolfgang, 14513 Teltow (DE)
(74) Vertreter: Andres, Angelika Maria
(86) Internationale Anmeldenummer: PCT/EP2005/056856
(87) Internationale Veröffentlichungsnummer: WO 2006/076996

(56) Entgegenhaltungen:
- EP-A- 0 764 839
- EP-A- 1 128 172
- EP-A- 1 167 938
- EP-A- 1 255 098
- DE-A1- 2 426 660
- DE-A1- 3 621 795
- DE-A1- 3 833 456
- DE-A1- 10 064 871
- DE-A1- 10 257 124
- DE-A1- 10 319 417
- DE-C1- 4 025 664
- DE-U1- 7 603 126
- US-A- 5 582 064

## Beschreibung

Die vorliegende Erfindung betrifft hydraulische Druckmittler sowie Druckaufnehmer bzw. Differenzdrucksensoren mit hydraulischen Druckmittlern.

Hydraulische Druckmittler im hier verwendeten Sinne umfassen einen Druckmittlerkörper in dem eine Druckkammer ausgebildet ist, und eine Trennmembran, welche die Druckkammer druckdicht verschließt. Die Trennmembran ist von der Druckkammer abgewandten Seite mit einem zu messenden Mediendruck beaufschlagbar, welcher durch die Trennmembran in die Druckkammer übertragen wird. Von der Druckkammer erstreckt sich ein hydraulischer Pfad zu einer Druckmesszelle eines Drucksensors, um die Druckmesszelle mit dem in der Druckkammer vorherrschenden Druck zu beaufschlagen. Der hydraulische Pfad umfasst ein definiertes Volumen, welches beispielsweise durch Kanäle, Leitungen oder Kammern gebildet und mit einer Übertragungsflüssigkeit gefüllt ist.

Die Übertragungsflüssigkeit weist eine temperaturabhängige Viskosität auf. Damit ergibt sich eine Schwierigkeit hinsichtlich der optimalen Bedämpfung des hydraulischen Pfades, mit der vermieden werden soll dass dynamische Überlaststöße zur Druckmesszelle übertragen werden. Eine ausreichende Bedämpfung bei hoher Temperatur führt andererseits zu einem zu trägen Übertragungsverhalten bei tieferen Temperaturen, und andererseits ist eine auf Raumtemperatur abgestimmte Dämpfung, die zudem eine dynamische Druckübertragung über den hydraulischen Pfad ermöglicht, bei hohen Temperaturen aufgrund der geringeren Viskosität zu schwach.

Das deutsche Gebrauchsmuster GM 76 03 126 offenbart eine Ausgleichseinrichtung für die thermische bedingte Volumenänderung einer Füllflüssigkeit im Druckmittler. Dabei werden Füllkörper in Kammern des Druckmittlers eingebracht, wobei das Wandmaterial der Kammern einen größeren Wärmeausdehnungskoeffizienten aufweist als das der Füllkörper. Das für die Füllflüssigkeit zur Verfügung stehende Restvolumen in den Kammern ist erheblich geringer als das Volumen der Füllkörper, Bei entsprechender Dimensionierung von Füllkörpern und Kammern kann das Restvolumen den gleichen Ausdehnungskoeffizienten aufweisen wie die Füllflüssigkeit. Damit kann ein statischer Druckfehler kompensiert vermieden werden. Zur Dämpfung von Druckstößen ist dem genannten Gebrauchsmuster jedoch nichts zu entnehmen.

Die Offenlegungsschrift DE 103 19 417 A1 offenbart einen Hochtemperaturdruckmittler mit einem Füllkörper zur Realiierung einer Flammendurchschlagsperre in einem hydraulischen Pfad. Die Dämpfung von Druckstößen ist nicht thematisiert.

Die Offenlegungsschrift DE 102 57 124 A1 offenbart einen hydraulischen Druckmittler mit einer von der Dynamik des Prozesses abhängigen Dämpfung. Temperaturabhängige Veränderungen des dynamischen Verhaltens des Druckmittlers sind nicht beachtet.

Das Patent DE 40 25 664 C1 offenbart einen Hochtemperaturdruckmittler, bei dem zur thermischen Entkopplung ein Stößel eingesetzt wird. Stößelsysteme sind aufwendig und haben sich in der Praxis nicht durchgesetzt.

Es ist daher die Aufgabe der vorliegenden Erfindung einen Druckmittler bereitzustellen, der das beschriebene Problem des Stands der Technik überwindet.

Diese Aufgabe wird erfindungsgemäß gelöst durch den Druckmittler gemäß des unabhängigen Patentanspruchs 1.

Der erfindungsgemäße Druckmittler umfasst
einen Druckmittlerkörper mit einer Druckkammer;
eine Trennmembran, welche die Druckkammer druckdicht verschließt, wobei die Trennmembran von der der Druckkammer abgewandten Seite mit einem Mediendruck beaufschlagbar ist, welcher durch die Trennmembran in die Druckkammer übertragen wird; und
einen hydraulischen Pfad der sich von der Druckkammer erstreckt und mit einer Druckmesszelle verbindbar ist, um die Druckmesszelle mit dem in der Druckkammer vorherrschenden Druck zu beaufschlagen; wobei der Druckmittler ferner ein hydraulisches Dämpfungselement aufweist, mit welchem der wirksame hydraulische Querschnitt des hydraulischen Pfades in zumindest einem Abschnitt des hydraulischen Pfades in Abhängigkeit von einer Temperatur des Druckmittlers veränderbar ist.

Es wird der wirksame Querschnitt mittels des Dämpfungselementes mit steigender Temperatur verringert.

Das Dämpfungselement kann beispielsweise einen flexiblen Verformungskörper, z.B. eine Steuermembran oder einen Steuerbalg, umfassen, welcher eine abgeschlossene hydraulische Steuerkammer von dem hydraulischen Pfad trennt, wobei die hydraulische Steuerkammer mit einer definierten Menge einer hydraulischen Steuerflüssigkeit gefüllt ist, welche den Verformungskörper temperaturabhängig auslenkt um den wirksamen Querschnitt eines Abschnitts des hydraulischen Pfades zu verändern.

Die Steuerkammer ist vorzugsweise so positioniert, dass die Temperatur der Steuerflüssigkeit ungefähr der Temperatur der Übemagungsflüssigkeit im hydraulischen Pfad entspricht.

In einer anderen Ausgestaltung kann das Dämpfungselement beispielsweise einen starren, verschiebbaren Steuerkörper, umfassen, welcher eine abgeschlossene hydraulische Steuerkammer von dem hydraulischen Pfad trennt, wobei die hydraulische Steuerkammer mit einer definierten Menge einer hydraulischen Steuerflüssigkeit gefüllt ist, welche den starren Steuerkörper temperaturabhängig verschiebt, um den wirksamen Querschnitt eines Abschnitts des hydraulischen Pfades zu verändern.

In einer Weiterbildung der zuvor geschilderten Ausgestaltung der Erfindung umfasst das Dämpfungselement einen Verformungskörper der einen starren Steuerkörper trägt. Wobei der Verformungskörper eine abgeschlossene hydraulische Steuerkammer von dem hydraulischen Pfad trennt, und die hydraulische Steuerkammer mit einer definierten Menge einer hydraulischen Steuerflüssigkeit gefüllt ist, welche den Verformungskörper temperaturabhängig auslenkt wodurch der daran gekoppelte starre Steuerkörper den wirksamen Querschnitt eines Abschnitts des hydraulischen Pfades verändert.

Anstelle einer Steuerung über das temperaturabhängige Volumen einer Steuerflüssigkeit, kann gemäß eines weiteren Gesichtspunkts der Erfindung auch eine Steuerung über unterschiedliche Ausdehnungskoeffizienten von Festkörpern erfolgen.

Demnach umfasst das Dämpfungselement einen ersten Steuerkörper und mindestens einen zweiten Steuerkörper, wobei zwischen mindestens einem ersten Abschnitt des ersten Körpers und einem Abschnitt des zweiten Körpers eine wirksamer Querschnitt des hydraulischen Pfades verläuft, und der erste Körper mit dem zweiten Körper direkt oder indirekt in einer Verbindungsanordnung starr verbunden ist. Die Verbindungsanordnung umfasst die beiden Körper und ggf. weitere Körper über welche die Verbindung der beiden Körper erfolgt. Zumindest zwei Körper der Verbindungsanordnung umfassen unterschiedliche Wärmeausdehnungskoeffizienten, wobei die Körper so aufeinander abgestimmt sind, dass der erste und der zweite Abschnitt temperaturabhängig zueinander Relativbewegungen ausführen, durch welche der wirksame Querschnitt des hydraulischen Pfades verändert wird.

Beispielsweise kann ein Körper, durch den der hydraulische Pfad in Form einer Bohrung verläuft, aus Edelstahl gefertigt sein, und als einer der Steuerkörper dienen. In der Bohrung ist ein Füllkörper angeordnet, der als zweiter Steuerkörper dient. Der Füllkörper kann beispielsweise Aluminium, Blei oder Zink aufweisen, wenn sich der Füllkörper stärker ausdehnen soll als der umgebende Körper, wobei Aluminium derzeit bevorzugt ist. Der Hydraulische Pfad würde bei diesem Ausführungsbeispiel durch einen Ringspalt zwischen dem Füllkörper und der Bohrung verlaufen. Zur Regulierung des wirksamen hydraulischen Querschnitts kann beispielsweise eine Kontur im Endbereich eines langen Füllkörpers bezüglich einer komplementären Gegenkontur in der Bohrung in axialer Richtung verschoben werden, wodurch sich die Ringspaltbreite zwischen den Konturen verändert. Geeignete Konturen sind grundsätzlich solche, bei denen - im Falle unterstellter Axialsymmetrie - die Querschnittsfläche sich in axialer Richtung zumindest abschnittsweise monoton verändert. Hierzu kann ein Endabschnitt des Füllkörpers beispielsweise eine konische oder Halbkugelförmige Mantelfläche aufweisen, wobei die Wand der Bohrung eine dazu komplementäre Kontur aufweist.

Gleichermaßen ist als zweiter Steuerkörper ein langer Füllkörper aus einem Werkstoff mit negativen Temperaturkoeffizienten (z.B. ZrW0208) in der Bohrung eines ersten Steuerkörpers aus Stahl geeignet, wobei der Füllkörper an seinem temperaturabhängig auslenkbaren Endabschnitt eine Kontur aufweist, deren Querschnittsfläche zum Ende hin monoton zunimmt, wobei die Bohrung eine komplementäre Gegenkontur aufweist. Mit steigender Temperatur verkürzt sich in diesem Fall der Füllkörper, wodurch sich die Kontur des Füllkörpers in axialer Richtung auf die komplementäre Gegenkontur zu bewegt. Damit nimmt der hydraulisch wirksame Querschnitt in dem Ringspalt zwischen der Kontur und der Gegenkontur mit steigender Temperatur ab, um die sinkende Viskosität der Übertragungsflüssigkeit auszugleichen. Der Einsatz eines Füllkörpers mit negativem Wärmeausdehnungskoeffizienten als zweiter Steuerkörper in der Bohrung eines ersten Steuerkörpers aus Stahl hat zudem den Effekt, dass zumindest ein Teil der Volumenausdehnung der Übertragungsflüssigkeit durch das vergrößerte Volumen zwischen dem Füllkörper und der umgebenden Bohrung kompensiert wird.

Der erfindungsgemäße Druckaufnehmer umfasst einen erfindungsgemäßen Druckmittler und eine Druckmesszelle, die mit dem hydraulischen Pfad kommuniziert.

Der erfindunsgemäße Differenzdruckaufnehmer umfasst mindestens einen ersten erfindungsgemäßen Druckmittler mit einem ersten hydraulischen Pfad, einen zweiten Druckmittler mit einem zweiten hydraulischen Pfad und eine Differenzdruckmesszelle, die mit dem ersten hydraulischen Pfad und mit dem zweiten hydraulischen Pfad kommuniziert.

Die Erfindung wird nun anhand der in den Zeichnungen dargestellten Ausführungsbeispiele erläutert. Es zeigt:

Fig. 1: einen Längsschnitt durch ein erstes Ausführungsbeispiel eines erfindungsgemäßen Druckmittlers; und

Fig. 2: einen Längsschnitt durch ein Drucksensormodul mit einem zweiten Ausführungsbeispiel eines erfindungsgemäßen Druckmittlers.

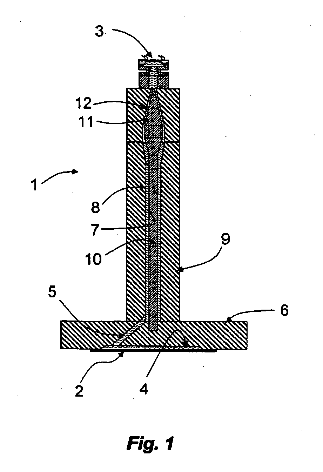

Der in Fig. 1 gezeigte Druckmittler 1 umfasst einen Druckmittlerkörper der einen Prozessanschlusskörper 6 und einen Dämpfungskörper 9 aufweist. In einer Stirnfläche des Prozessanschlusskörpers 6 ist eine Vertiefung für eine Druckkammer 4 ausgebildet, die mit Trennmembran 2 druckdicht verschlossen ist, welche im Einsatz einem Medium ausgesetzt wird, dessen Mediendruck zu erfassen ist. Von der Druckkammer 4 erstreckt sich ein hydraulischer Pfad durch den Dämpfungskörper 9, wobei der hydraulische Pfad mit einer Druckmesszelle 3 verbindbar ist, um diese mit dem Mediendruck zu beaufschlagen. In der Fig. 1 ist die Druckmesszelle 3 auf den Dämpfungskörper 9 aufgesetzt, wobei zwischen der Druckmesszelle 3 und dem Dämpfungskörper 9 noch eine dem Fachmann geläufigen Entkopplungsanordnung zum Ausgleich unterschiedlicher Wärmeausdehnungseigenschaften von beispielsweise einem Dämpfungskörper aus Stahl und einer Halbleiterdruckmesszelle vorgesehen sein kann, wobei die Entkopplungsanordnung beispielsweise einen Glaskörper aufweist.

Zwischen dem Dämpfungskörper 9 und der Druckmesszelle 3 kann noch ein weiterer Abschnitt des hydraulischen Pfades vorgesehen sein, beispielsweise in Form einer längeren Kapillarleitung. Gleichermaßen kann zwischen dem Prozessanschlusskörper 6 und dem Dämpfungskörper 9 eine längere Kapillarleitung vorgesehen sein.

Der hydraulische Pfad verläuft von der Druckkammer 4 durch eine Bohrung 5 durch den Prozesskörper 6 in einen Ringkanal 7, der zwischen einer axialen Bohrung 8 durch den Dämpfungskörper 9 und der Mantelfläche eines Füllkörpers 10 ausgebildet ist.

Der Füllkörper 10 umfasst einen langen zylindrischen Schaft und ist mit seinem prozessseitigen Ende starr mit dem Dämpfungskörper 9 verbunden. Im Ausführungsbeispiel ist dies eine indirekte starre Verbindung, die über den Prozessanschlusskörper erfolgt, beispielsweise durch Verschrauben und/oder Verschweißen des Füllkörpers mit dem Prozessanschlusskörper sowie des Prozessanschlusskörpers mit dem prozessseitigen Ende des Dämpfungskörpers.

Der Füllkörper 10 umfasst in einem dem Prozessanschlusskörper abgewandten Endabschnitt einen konischen Abschnitt 11 welcher einem komplementären konischen Wandabschnitt 12 in der Bohrung 8 durch den Dämpfungskörper 9 gegenüberliegt. Der konische Abschnitt und der konische Wandabschnitt haben etwa den gleichen Konuswinkel. Die Länge des konischen Abschnitts ist erheblich geringer als die Gesamtlänge des Füllkörpers. Das Material des Füllkörpers bzw. zumindest das Material des langen zylindrischen Schafts des Füllkörpers weist einen größeren Wärmeausdehnungskoeffizienten auf, als das Material des Dämpfungskörpers.

Die Länge des Füllkörpers beträgt mindestens das 4-fache, vorzugsweise mindestens das 8-fache der Länge des konischen Abschnitts. Diese Längenrelationen sind ohne weiteres für Druckmittler im Hochtemperaturbereich zu erzielen, denn zur thermischen Entkopplung der Druckmesszelle bzw. einer hier nicht näher diskutierten Sensorelektronik von einem heißen Prozessmedium sind ohnehin große Abstände erforderlich, die durch lange Druckmittler erzielt werden können.

Der Füllkörper 10 und der Dämpfungskörper 9 dienen als erster und zweiter Steuerkörper eines temperaturabhängigen Dämpfungselementes, denn mit steigender Temperatur bewegt sich der konische Abschnitt 11 des Füllkörpers 10 weiter in den konischen Wandabschnitt 12 des Dämpfungskörpers 9, so dass sich der hydraulisch wirksame Querschnitt des Ringkanals 7 zwischen den konischen Abschnitten verringert.

Auf diese Weise kann die bei steigenden Temperaturen sinkende Viskosität der Übertragungsflüssigkeit durch einen vergrößerten Strömungswiderstand im Ringspalt zwischen den konischen Abschnitten ausgeglichen werden.

In einer Weiterbildung dieser Ausgestaltung der Erfindung, kann ein Abschnitt des hydraulischen Pfades in dem Ringkanal 7 zwischen dem Füllkörper 10 und der Bohrung 8 so bemessen sein, dass er die Anforderungen an eine Flammendurchschlagsperre erfüllt hierzu bietet sich insbesondere ein zylindrischer Abschnitt an, in dem Wärmeausdehnungsunterschiede nur vernachlässigbare Veränderungen der Ringspaltbreite bewirken.

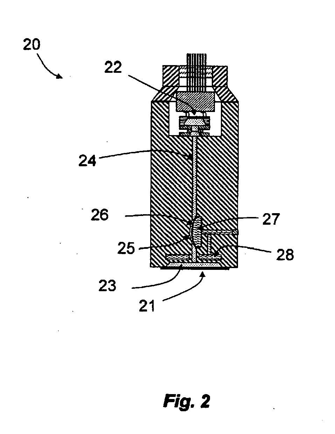

Die in Fig. 2 gezeigte Ausgestaltung der Erfindung 20 umfasst ein Sensormodul eines Druckaufnehmers, welches einen integrierten Druckmittler im Sensorkörper aufweist. Der Druckmittler umfasst einen hydraulischen Pfad, der sich zwischen einer Druckkammer 23, die von einer prozessseitigen Trennmembran 21 verschlossen ist, zu einer Druckmesszelle 22 erstreckt, wobei er einen Kanal 24 umfasst, der in axialer Richtung durch den Sensorkörper verläuft.

Der Kanal 25 schneidet ein Membranbett 25, welches rotationssymmetrisch im Innern des Sensorkörpers um eine Achse ausgebildet ist, die den Kanal 25 schneidet und auf diesem senkrecht steht.

Dem Membranbett 25 gegenüber ist eine flexible Steuermembran 26 angeordnet welche eine abgeschlossene hydraulische Steuerkammer 27 in dem Sensorkörper von dem hydraulischen Pfad trennt, wobei die hydraulische Steuerkammer mit einer definierten Menge einer hydraulischen Steuerflüssigkeit gefüllt ist. Der hydraulische Pfad verläuft durch den Spalt zwischen dem Membranbett 25 und der Steuermembran 26, wobei die Steuermembran durch die Wärmeausdehnung der Steuerflüssigkeit temperaturabhängig ausgelenkt wird und damit den wirksamen hydraulischen Querschnitt des hydraulischen Pfades zwischen der Steuermembran 26 und dem Membranbett 25 temperaturabhängig zu steuern. Die Steuerkammer 27 kann beispielsweise eine Ringkammer 28 umfassen die nahe zur Druckkammer 23 angeordnet ist und eine großflächige gemeinsame Wand mit dieser aufweist. Auf diese Weise folgt die Temperatur der Steuerflüssigkeit in der Steuerkammer 27 schnell der Temperatur der Übertragungsflüssigkeit in der Druckkammer 23. Die Steuerung des wirksamen hydraulischen Querschnitts des Dämpfungselementes reagiert somit schnell auf die Temperaturbedingten Viskositätsänderungen der Übertragungsflüssigkeit.

## Patentansprüche

1. Druckmittler, umfassend:
einen Druckmittlerkörper mit einer Druckkammer;
eine Trennmembran, welche die Druckkammer druckdicht verschließt, wobei die Trennmembran von der der Druckkammer abgewandten Seite mit einem Mediendruck beaufschlagbar ist, welcher durch die Trennmembran in die Druckkammer übertragen wird; und
einen hydraulischen Pfad der sich von der Druckkammer erstreckt und mit einer Druckmesszelle verbindbar ist, um die Druckmesszelle mit dem in der Druckkammer vorherrschenden Druck zu beaufschlagen; wobei
der Druckmittler ferner ein hydraulisches Dämpfungselement aufweist, mit welchem der wirksame hydraulische Querschnitt des hydraulischen Pfades in zumindest einem Abschnitt des hydraulischen Pfades in Abhängigkeit von einer Temperatur des Druckmittlers veränderbar ist, wobei der wirksame Querschnitt mittels des Dämpfungselementes mit steigender Temperatur verringert wird.

2. Druckmittler nach Anspruch 1, wobei
das Dämpfungselement einen flexiblen Verformungskörper umfasst, welcher eine abgeschlossene hydraulische Steuerkammer von dem hydraulischen Pfad trennt, und
die hydraulische Steuerkammer mit einer definierten Menge einer hydraulischen Steuerflüssigkeit gefüllt ist, welche den Verformungskörper temperaturabhängig auslenkt um den wirksamen Querschnitt eines Abschnitts des hydraulischen Pfades zu verändern.

3. Druckmittler nach Anspruch 2, wobei die Steuerkammer benachbart zur Druckkammer positioniert ist, um eine Temperaturannäherung zwischen der Druckkammer und der Steuerkammer zu ermöglichen.

4. Druckmittler nach Anspruch 1, wobei
das Dämpfungselement einen starren, verschiebbaren Steuerkörper umfasst, welcher eine abgeschlossene hydraulische Steuerkammer von dem hydraulischen Pfad trennt, und
die hydraulische Steuerkammer mit einer definierten Menge einer hydraulischen Steuerflüssigkeit gefüllt ist, welche den starren Steuerkörper temperaturabhängig verschiebt, um den wirksamen Querschnitt eines Abschnitts des hydraulischen Pfades zu verändern.

5. Druckmittler nach Anspruch 1, wobei
das Dämpfungselement einen Verformungskörper aufweist, an den ein starrer Steuerkörper gekoppelt ist,
der Verformungskörper eine abgeschlossene hydraulische Steuerkammer von dem hydraulischen Pfad trennt, und
die hydraulische Steuerkammer mit einer definierten Menge einer hydraulischen Steuerflüssigkeit gefüllt ist, welche den Verformungskörper temperaturabhängig auslenkt, wodurch der daran gekoppelte starre Steuerkörper den wirksamen Querschnitt eines Abschnitts des hydraulischen Pfades verändert.

6. Druckmittler nach Anspruch 1, wobei
das Dämpfungselement einen ersten Steuerkörper und mindestens einen zweiten Steuerkörper umfasst,
zwischen mindestens einem ersten Abschnitt des ersten Steuerkörpers und einem zweiten Abschnitt des zweiten Steuerkörpers ein wirksamer Querschnitt des hydraulischen Pfades verläuft,
der erste Körper mit dem zweiten Körper direkt oder indirekt in einer Verbindungsanordnung starr verbunden, die Verbindungsanordnung zumindest zwei Körper umfasst die unterschiedliche Wärmeausdehnungskoeffizienten aufweisen, wobei die Körper so aufeinander abgestimmt sind, dass der erste und der zweite Abschnitt temperaturabhängig zueinander Relativbewegungen ausführen, durch welche der wirksame Querschnitt des hydraulischen Pfades verändert wird.

7. Druckmittler nach Anspruch 6, wobei der veränderbare wirksame hydraulische Querschnitt zwischen dem erste Abschnitt des ersten Steuerkörpers und dem zweiten Abschnitt des zweiten Steuerkörpers einen Ringspalt umfasst.

8. Druckmittler nach Anspruch 7, wobei der erste Abschnitt des ersten Steuerkörpers eine konische Mantelfläche aufweist, und der zweite Abschnitt des zweiten Steuerkörpers eine konische Wand umfasst.

9. Druckaufnehmer, umfassend:
einen Druckmittler nach einem der vorhergehenden Ansprüche und
eine Druckmesszelle, die mit dem hydraulischen Pfad verbunden ist.

10. Differenzdruckaufnehmer, umfassend:
mindestens einen ersten Druckmittler nach einem der Ansprüche 1 bis 8 mit einem ersten hydraulischen Pfad;
einen zweiten Druckmittler mit einem zweiten hydraulischen Pfad; und
eine Differenzdruckmesszelle, die mit dem ersten hydraulischen Pfad und mit dem zweiten hydraulischen Pfad kommuniziert.

## Claims

1. Diaphragm seal, comprising:
- a diaphragm seal body with a pressure chamber;
- a process isolating diaphragm, which seals the pressure chamber pressure-tight, whereby the process isolating diaphragm can be exposed to a medium pressure from the side facing away from the pressure chamber, said medium pressure being transferred through the process isolating diaphragm into the pressure chamber; and
- a hydraulic path that extends from the pressure chamber and can be connected to a pressure measuring cell in order to expose the pressure measuring cell to the pressure that is present in the pressure chamber, whereby
- the diaphragm seal further exhibits a hydraulic damping element, with which the effective hydraulic cross-section of the hydraulic path can be changed in at least one section of the hydraulic path depending on the temperature of the diaphragm seal, whereby the effective cross-section is decreased with the damping element with increasing temperatures.

2. Diaphragm seal as per Claim 1, **characterized in that**:
- the damping element comprises a flexible deformation body which separates a sealed hydraulic control chamber from the hydraulic path and
- the hydraulic control chamber is filled with a defined quantity of a hydraulic control liquid which deflects the distortion body depending on the temperature to change the effective cross-section of a section of the hydraulic path.

3. Diaphragm seal as per Claim 2, **characterized in that** the control chamber is located beside the pressure chamber to allow temperature convergence between the pressure chamber and the control chamber.

4. Diaphragm seal as per Claim 1, **characterized in that**:
- the damping element comprises a rigid, movable control body which separates a sealed hydraulic control chamber from the hydraulic path, and
- the hydraulic control chamber is filled with a defined quantity of a hydraulic control liquid which moves the rigid control body depending on the temperature in order to change the effective cross-section of a section of the hydraulic path.

5. Diaphragm seal as per Claim 1, **characterized in that**:
- the damping element exhibits a distortion body to which a rigid control body is connected
- the distortion body separates a sealed hydraulic control chamber from the hydraulic path and
- the hydraulic control chamber is filled with a defined quantity of hydraulic control liquid that deflects the distortion body depending on the temperature, which causes the connected rigid control body to change the effective cross-section of a section of the hydraulic path.

6. Diaphragm seal as per Claim 1, **characterized in that**:
- the damping element comprises a first control body and at least a second control body, with an effective cross-section of the hydraulic path arranged between at least one first section of the first control body and one second section of the second control body.
- the first body is rigidly connected to the second body, either directly or indirectly, in a connection arrangement, said connection arrangement comprising at least two bodies with different thermal expansion coefficients, whereby the bodies are inter-coordinated in such a way that the first and second section make relative movements vis-à-vis one another depending on the temperature, which causes the effective cross-section of the hydraulic path to change.

7. Diaphragm seal as per Claim 6, whereby the changeable effective hydraulic cross-section between the first section of the first control body and the second section of the second control body comprises an annular orifice.

8. Diaphragm seal as per Claim 7, whereby the first section of the first control body exhibits a conical shell, and the second section of the second control body comprises a conical wall.

9. Pressure sensor, comprising:
- a diaphragm seal as per one of the previous claims and
- a pressure measuring cell which is connected to the hydraulic path

10. Differential pressure transmitter, comprising:
- at least one first diaphragm seal as per one of the Claims 1 to 8 with a first hydraulic path;
- a second diaphragm seal with a second hydraulic path; and
- a differential pressure measuring cell which communicates with the first hydraulic path and the second hydraulic path.

## Revendications

1. Séparateur, comprenant :
un corps de séparateur avec une chambre de pression ;
une membrane de séparation, qui obture la chambre de pression de façon étanche à la pression, la membrane de séparation pouvant être soumise à une pression de produit sur le côté opposé à la chambre de pression, laquelle pression est transmise par la membrane de séparation dans la chambre de pression ; et
une voie hydraulique, qui s'étend depuis la chambre de pression et peut être reliée avec une cellule de mesure de pression, afin de soumettre la cellule de mesure de pression à la pression régnant dans la chambre de pression ; où
le séparateur présente en outre un élément d'amortissement hydraulique, avec lequel la section hydraulique efficace de la voie hydraulique est modifiable, au moins dans un tronçon de la voie hydraulique, en fonction d'une température du séparateur, la section efficace diminuant au moyen de l'élément d'amortissement à mesure que la température augmente.

2. Séparateur selon la revendication 1, pour lequel
l'élément d'amortissement comprend un corps de déformation flexible, lequel sépare de la voie hydraulique une chambre de commande hydraulique fermée, et
la chambre de commande hydraulique est remplie avec une quantité définie d'un liquide de commande hydraulique, lequel dévie le corps de déformation en fonction de la température, afin de modifier la section active d'un tronçon de la voie hydraulique.

3. Séparateur selon la revendication 2, pour lequel la chambre de commande est positionnée à côté de la chambre de pression, afin de permettre un alignement de la température entre la chambre de pression et la chambre de commande.

4. Séparateur selon la revendication 1, pour lequel
l'élément d'amortissement comprend un corps de commande rigide, déplaçable, lequel sépare de la voie hydraulique une chambre de commande hydraulique fermée, et
la chambre de commande hydraulique est remplie d'une quantité définie d'un liquide de commande hydraulique, lequel déplace le corps de commande rigide en fonction de la température, afin de modifier la section efficace d'un tronçon de la voie hydraulique.

5. Séparateur selon la revendication 1, pour lequel
l'élément d'amortissement comprend un corps de déformation, auquel est couplé un corps de commande rigide,
le corps de déformation sépare de la voie hydraulique une chambre de commande hydraulique fermée, et
la chambre de commande hydraulique est remplie d'une quantité définie d'un liquide de commande hydraulique, lequel dévie le corps de déformation en fonction de la température, ce par quoi le corps de commande rigide, qui y est couplé, modifie la section efficace d'un tronçon de la voie hydraulique.

6. Séparateur selon la revendication 1, pour lequel
l'élément d'amortissement comprend un premier corps de commande et au moins un deuxième corps de commande,
une section efficace de la voie hydraulique se déroule entre au moins un premier tronçon du premier corps de commande et un deuxième tronçon du deuxième corps de commande,
le premier corps est relié par une liaison rigide directement ou indirectement avec le deuxième corps dans un dispositif de liaison, le dispositif de liaison comprenant au moins deux corps présentant des coefficients de dilatation thermique différents, les corps étant assortis de telle manière que le premier et le deuxième tronçon exécutent des mouvements relatifs en fonction de la température, à travers lesquels la section efficace de la voie hydraulique est modifiée.

7. Séparateur selon la revendication 6, pour lequel la section hydraulique efficace modifiable comprend un espace annulaire entre le premier tronçon du premier corps de commande et le deuxième tronçon du deuxième corps de commande.

8. Séparateur selon la revendication 7, pour lequel le premier tronçon du premier corps de commande présente une surface latérale conique, et le deuxième tronçon du deuxième corps de commande présente une paroi conique.

9. Capteur de pression, comprenant :
un séparateur selon l'une des revendications précédentes et
une cellule de mesure de pression, qui est reliée avec la voie hydraulique.

10. Capteur de pression différentielle, comprenant :
au moins un premier séparateur selon l'une des revendications 1 à 8 avec une première voie hydraulique ; et
une cellule de mesure de pression différentielle, qui communique avec la première voie hydraulique et avec la deuxième voie hydraulique.
